# EUROPÄISCHE PATENTANMELDUNG

(11) **EP 1 808 403 A2**
(43) Veröffentlichungstag der Anmeldung: **18.07.2007**
(21) Anmeldenummer: 06027087.3
(22) Anmeldetag: 29.12.2006
(51) Int. Cl.: B66F 9/075, B60K 1/04

(54) **Flurförderzeug mit einer austauschbaren Energieversorgungseinheit**

(30) Priorität: 17.01.2006 DE 102006002243
(71) Anmelder: STILL GMBH, D-22113 Hamburg (DE)
(72) Erfinder: Mittmann, Heribert, 22359 Hamburg (DE)
(74) Vertreter: Geirhos, Johann

(57) **Zusammenfassung**

Die Erfindung betrifft ein Flurförderzeug (1) mit mindestens einer austauschbaren Energieversorgungseinheit (3) und einer Vorrichtung (7) zur Fixierung der austauschbaren Energieversorgungseinheit (3) in mindestens einer Bewegungsrichtung. Die Vorrichtung (7) zur Fixierung der Energieversorgungseinheit (3) ist derart ausgebildet, dass die Energieversorgungseinheit (3) selbsttätig fixierbar ist.

## Beschreibung

Die Erfindung betrifft ein Flurförderzeug mit einer austauschbaren Energieversorgungseinheit und einer Vorrichtung zur Fixierung der austauschbaren Energieversorgungseinheit in mindestens einer Bewegungsrichtung.

Zur Energieversorgung von Flurförderzeugen werden häufig anstelle fest installierter Vorrichtungen, wie beispielsweise Verbrennungsmotoren in Kombination mit Treibstofftanks, austauschbaren Energieversorgungseinheiten verwendet. Neben den weit verbreiteten Wechselbatterien können dies so genannte Power Packs, d.h. Vorrichtungen, die zumeist ähnliche Abmessungen wie eine Wechselbatterie aufweisen und bei denen ein Brennstofftank sowie eine Vorrichtung zur Erzeugung elektrischer Energie aus dem Brennstoff, insbesondere eine Brennstoffzelleneinheit, in einer Baueinheit zusammengefasst sind. Sind die Energievorräte der Energieversorgungseinheit erschöpft, kann diese direkt gegen eine weitere Energieversorgungseinheit mit vollen Vorräten ausgetauscht werden, so dass die Stillstandszeit des Flurförderzeugs minimiert wird. Die Energieversorgungseinheit ist dazu zumeist in einem abgetrennten Bereich des Flurförderzeugs angeordnet, der als Batteriefach bezeichnet wird.

Das Batteriefach ist in seinen Abmessungen möglichst kompakt, um den knappen im Flurförderzeug zur Verfügung stehenden Platz optimal auszunutzen. Um einen zügigen Wechsel der Energieversorgungseinheit zu ermöglichen, muss es jedoch deutlich größer als die größte einzuführende Energieversorgungseinheit sein, da diese ansonsten zu leicht verkantet. Auch um eine hinreichende Belüftung der Energieversorgungseinheit sicherzustellen, muss das Batteriefach gewisse Mindestmaße besitzen. Aufgrund des Abstandes der Energieversorgungseinheit von den Seitenwänden des Batteriefachs kann sich die Energieversorgungseinheit bei abrupten Fahrzeugbewegungen in Relation zu dem Batteriefach bewegen und beispielsweise an eine der Seitenwände anschlagen, was zu einer Beschädigung des Flurförderzeugs und/oder der Energieversorgungseinheit führen kann. Da der Abstand zu den vorderen beziehungsweise hinteren Seitenwänden des Batteriefachs besonders groß ist, sind besonders Bewegungen der Energieversorgungseinheit in Fahrzeuglängsrichtung gefährlich und müssen unterbunden werden.

Um unerwünschte Bewegungen der Energieversorgungseinheit zu vermeiden, wird diese bei Fahrzeugen nach dem Stand der Technik zumeist mittels geeigneter Vorrichtungen fixiert. Bekannt ist die Verwendung von Gurten oder beweglichen Halterungen, die von der Bedienperson von einer Ruheposition in eine Halteposition gebracht werden und so die Energieversorgungseinheit fixieren. Nachteilig an diesen Vorrichtungen ist jedoch, dass die Bedienperson nach dem Einführen der Energieversorgungseinheit diese Haltevorrichtungen anbringen und ggf. sichern muss. Dies erfordert zusätzliche Zeit und Aufwand und bringt, wenn vergessen wird, die Vorrichtungen zu betätigen, erhebliche Sicherheitsrisiken mit sich.

Fest installierte Haltevorrichtungen hingegen, beispielsweise am Boden des Batteriefachs angeordnete Halteleisten, erfordern große Sorgfalt beim Einbringen der Energieversorgungseinheit. Zudem ist eine Verwendung von Energieversorgungseinheiten mit unterschiedlichen Abmessungen nur schwer oder gar nicht möglich, da die fest installierten Halterungen nur für eine Größe der Energieversorgungseinheit ausgelegt sind und ansonsten entweder nicht ausreichend an der Energieversorgungseinheit anliegen und somit keine ausreichende Haltewirkung besitzen, oder aber zu eng sind und diese keinen Platz hat.

Der Erfindung liegt daher die Aufgabe zugrunde, ein Flurförderzeug mit einer austauschbaren Energieversorgungseinheit und einer Vorrichtung zur Fixierung der austauschbaren Energieversorgungseinheit in mindestens einer Bewegungsrichtung zu schaffen, das mit geringem Aufwand einen einfachen Austausch der Energieversorgungseinheit, möglichst unabhängig von den Abmessungen der Energieversorgungseinheit, ermöglicht.

Diese Aufgabe wird erfindungsgemäß dadurch gelöst, dass die Vorrichtung zur Fixierung der Energieversorgungseinheit derart ausgebildet ist, dass die Energieversorgungseinheit selbsttätig fixierbar ist. Die zeitaufwändige und fehleranfällige Fixierung der Energieversorgungseinheit von Hand entfällt.

Vorteilhafterweise weist die Vorrichtung mindestens ein im Bodenbereich und/oder mindestens einer, vorzugsweise parallel zur Fahrzeuglängsachse orientierten Wand eines Batteriefachs angeordnetes Rastelement, insbesondere einen Rasthaken, auf. Als Wand ist jede äußere Begrenzung des Batteriefachs, insbesondere auch die Decke, zu sehen, auch wenn es sich dabei um durchbrochene Konstruktionen wie beispielsweise Gitter oder Lochbleche handelt. Rastelemente, wie beispielsweise Rasthaken oder Rastnasen, sind Elemente, die in eine Richtung eine weitgehend ungehemmte Bewegung gestatten, während in der Gegenrichtung keine Bewegung möglich ist. Die Verwendung derartiger Rastelemente ermöglicht somit gewünschte Bewegungen, wie das Einführen der Energieversorgungseinheit, und verhindert die unerwünschte Gegenbewegung, wie beispielsweise das Herausrutschen der Energieversorgungseinheit. Eine Bewegung der Batterie parallel zur Fahrzeuglängsrichtung, beispielsweise beim Beschleunigen und/oder Bremsen, ist besonders schädlich und kann durch im Bodenbereich und/oder in den parallel zur Fahrtrichtung orientierten Wänden des Batteriefachs angeordnete Rastelemente besonders gut unterbunden werden, da diese im Vergleich zu den orthogonal zur Fahrtrichtung ausgerichteten Vorder- beziehungsweise Rückwänden zumeist sehr nah an der Batterie angeordnet sind und durch ihre Ausrichtung zur Aufnahme von Kräften in Fahrzeuglängsrichtung gut geeignet sind. Insbesondere eine Anbringung im Bodenbereich ist vorteilhaft, da dieser, um das Gewicht der Batterie aufzunehmen, zumeist besonders stabil ausgeführt ist.

Weiterhin ist es vorteilhaft, wenn die Vorrichtung mehrere im Bodenbereich und/oder mindestens einer, vorzugsweise parallel zur Fahrzeuglängsachse orientierten Wand eines Batteriefachs angeordnete Rastelemente, insbesondere Rasthaken, aufweist. Durch die Verwendung von mehreren, das heißt drei oder mehr Rastelementen wird sichergestellt, dass die Energieversorgungseinheit unabhängig von der Ausgangsposition sicher fixiert wird, da nur ein geringer Bewegungsweg bis zum Einrasten der Energieversorgungseinheit in die Rastelemente zur Verfügung steht und der Bewegungsweg zwischen den aktiven Rastelementen gering ist. Bei Verwendung verschiedener Energieversorgungseinheiten mit unterschiedlichen Abmessungen ist so zudem sichergestellt, dass jede Energieversorgungseinheit sicher fixiert wird.

Zweckmäßigerweise entspricht der Abstand zwischen einem Rastelement und einem weiteren, in Gegenrichtung wirksamen Element zum Fixieren der Energieversorgungseinheit, insbesondere mindestens einem weiteren Rastelement, annähernd einer der Hauptabmessungen der Energieversorgungseinheit. Dadurch wird eine Bewegung der Energieversorgungseinheit entlang der Achse der betroffenen Hauptabmessung, als beispielsweise in Längs- oder Querrichtung der Energieversorgungseinheit, praktisch vollständig verhindert. Das weitere, in Gegenrichtung wirksame Element zum Fixieren der Energieversorgungseinheit kann dabei nicht nur ein Rastelement sein, sondern beispielsweise auch ein fest installierter Anschlag oder eine entsprechend ausgelegte Wand des Batteriefachs.

Weiterhin ist es zweckmäßig, wenn die Fixierung der Energieversorgungseinheit selbsttätig lösbar ist. Dadurch wird eine schnelle, einfache und sichere Entnahme der Energieversorgungseinheit ermöglicht.

Es ist ebenso zweckmäßig, wenn die Fixierung der Energieversorgungseinheit durch Eingriff einer Bedienperson lösbar ist. Indem die Bedienperson gezielt die Fixierung aufhebt, wird ihr bewusst, dass die Energieversorgungseinheit ungesichert ist.

Vorteilhafterweise ist die Vorrichtung mittels Federkraft betätigbar. Eine Betätigung mit Federkraft ermöglicht einen einfachen Aufbau und eine Betätigung unabhängig von fahrzeuginternen und/oder -externen Energiequellen.

In einer zweckmäßigen Ausbildung der Erfindung ist die Energieversorgungseinheit als Batterie ausgebildet. Batterien sind die einfachsten und kostengünstigsten Energieversorgungseinheiten für Flurförderzeuge.

In einer weiteren zweckmäßigen Ausbildung der Erfindung ist die Energieversorgungseinheit als Baueinheit von Brennstoffzelleneinheit und Energiespeicher ausgebildet. Derartige Baueinheiten, die häufig im Tausch für Wechselbatterien verwendet werden, besitzen oft ähnliche Abmessungen wie Wechselbatterien.

Weitere Vorteile und Einzelheiten der Erfindung werden im Folgenden anhand des in der Zeichnung dargestellten Ausführungsbeispiels näher erläutert. Gleiche Teile sind mit gleichen Bezugszeichen gekennzeichnet. Dabei zeigt
- Figur 1: einen Gegengewichtsgabelstapler mit einem Batteriefach,
- Figur 2: eine Detailansicht des Batteriefachs mit der erfindungsgemäßen Vorrichtung.

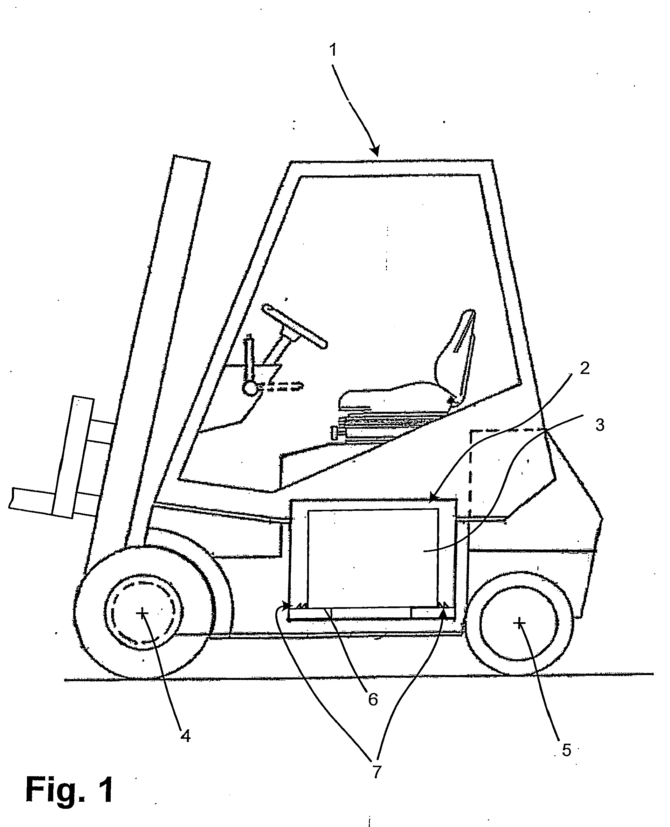

Figur 1 zeigt einen Gegengewichtsgabelstapler 1 mit einem so genannten Batteriefach 2. In dem Batteriefach 2 befindet sich eine Batterie 3 als Beispiel für eine austauschbare Energieversorgungseinheit. Die Batterie 3 kann aus dem Fahrzeug 1 entnommen werden, indem diese beispielsweise von einem weiteren Gabelstapler angehoben und seitlich abtransportiert wird. Das Batteriefach 2 ist zwischen Vorderachse 4 und Hinterachse 5 angeordnet und kann mittels einer hier nicht dargestellten Klappe verschlossen werden. Um das Einführen der Batterie 3 oder einer anderen austauschbaren Energieversorgungseinheit zu erleichtern, ist das Batteriefach 2 geringfügig größer als die Außenmaße der größten zu verwendenden Energieversorgungseinheit ausgeführt, angesichts der beengten Raumverhältnisse im Gabelstapler 1 aber nicht größer als unbedingt notwendig. Sowohl seitlich als auch in Fahrtrichtung (Pfeil A) wird die Batterie 3 daher bei Fahrzeugen nach dem Stand der Technik mittels von der Bedienperson betätigbarer Haltevorrichtungen, wie beispielsweise Schwenkhebel, fixiert. Im gezeigten Ausführungsbeispiel dagegen ist im Boden 6 des Batteriefachs 2 eine erfindungsgemäße Vorrichtung 7 zur selbsttätigen Fixierung der Batterie 3 angeordnet.

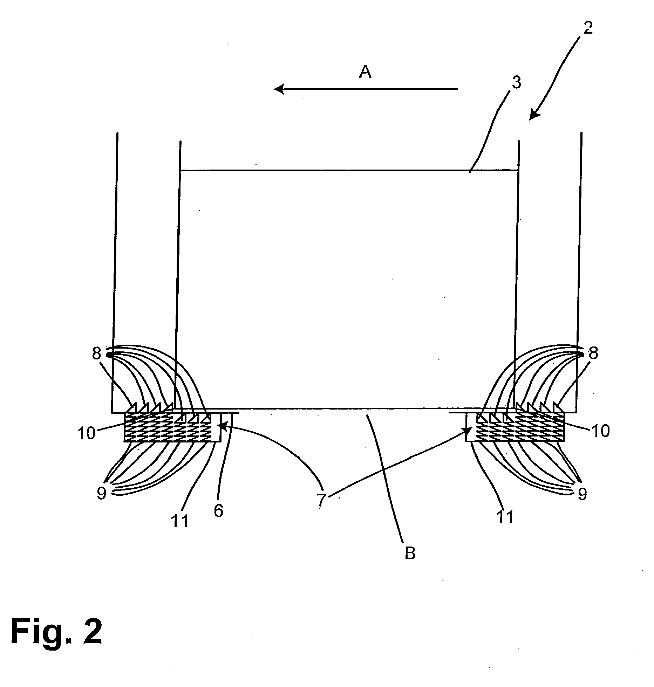

Die Vorrichtung 7 zur Fixierung der Batterie 3 ist in Figur 2 in einer Detailansicht des Batteriefachs 2 dargestellt, wobei ein Schnitt entlang der Fahrzeuglängsachse gezeigt ist. Im Wesentlichen besteht die Vorrichtung 7 aus einer Vielzahl von Rasthaken 8, die im Boden 6 des Batteriefachs 2 angeordnet und geführt sind und mittels Federn 9 nach oben herausgedrückt werden. Wird die Batterie 3 abgesetzt, werden die unter der Batterie 3 befindlichen Rasthaken 8 in den Boden 6 hineingedrückt. Befindet sich die Batterie 3 beim ersten Absetzen in einer Position, in der eine Bewegung möglich ist, beispielsweise, weil die Batterie 3 genau so auf den Rasthaken 8 platziert ist, dass beide Kanten 10 der Batterie 3 genau auf den Spitzen von Rasthaken 8 zu ruhen kommen, so wird bei der ersten Bewegung der Batterie 3, beispielsweise bei einem Anfahr- oder Bremsvorgang, die Batterie 3 soweit verrutschen, dass auf einer Seite der oder die Rasthaken 8 freigegeben werden und die Batterie 3 keine Bewegung in der Gegenrichtung mehr ausführen kann. In der Figur sind aufgrund der geschnittenen Darstellung lediglich Rasthaken 8 gezeigt, die eine Bewegung der Batterie 3 in Fahrzeuglängsrichtung verhindern. Es können jedoch auch, vorzugsweise im mittleren Bereich B, Rasthaken 8 vorgesehen sein, die eine seitliche Bewegung der Batterie 3 hemmen.

Bietet das Batteriefach 2 wie im gezeigten Ausführungsbeispiel nach oben hin genug Raum, um die Batterie 3 bei der Entnahme über die ausgefahrenen Rasthaken 8 hinweg bewegen zu können, kann der gezeigte einfache Mechanismus gewählt werden. Ist jedoch ein weites Anheben der Batterie 3 nicht möglich oder gewünscht, so kann eine Vorrichtung zur Aufhebung der Fixierung vorteilhaft sein. Im gezeigten Ausführungsbeispiel kann dies durch ein Absenken der Bodenplatte 11, auf der sich die Federn 9 abstützen, erreicht werden. Hierzu kann entweder von einer Bedienperson ein Entriegelungsmechanismus betätigt werden, oder aber die Absenkung ist mit der Öffnung der nicht dargestellten Klappe gekoppelt, mit der das Batteriefach 2 im Fahrbetrieb verschlossen wird.

Anstelle der mechanischen Federn 9 können selbstverständlich auch andere Federmechanismen Verwendung finden, insbesondere solche, die auf pneumatischen und/oder hydraulischen Elementen beruhen. Die Rasthaken 8 sind je nach Abmessungen der verwendeten Energieversorgungseinheiten zweckmäßig angeordnet, also beispielsweise, wie in Figur 2 gezeigt, in Reihen, die orthogonal zur Fahrzeuglängsachse orientiert sind oder auch gestuft. Anstelle der Rasthaken 8 sind auch andere Rastelemente denkbar, wie beispielsweise einseitig schwenkbar gelagerte Platten, die mittels Federkraft aufgestellt werden. Anstelle der gezeigten Schraubenfedern sind beispielsweise auch Torsionsfedern denkbar, die bei schwenkbaren Rastelementen besonders vorteilhaft sind.

## Patentansprüche

1. Flurförderzeug (1) mit mindestens einer austauschbaren Energieversorgungseinheit (3) und einer Vorrichtung (7) zur Fixierung der austauschbaren Energieversorgungseinheit (3) in mindestens einer Bewegungsrichtung, **dadurch gekennzeichnet, dass** die Vorrichtung (7) zur Fixierung der Energieversorgungseinheit (3) derart ausgebildet ist, dass die Energieversorgungseinheit (3) selbsttätig fixierbar ist.

2. Flurförderzeug (1) nach Anspruch 1, **dadurch gekennzeichnet, dass** die Vorrichtung (7) mindestens ein im Bodenbereich (6) und/oder mindestens einer, vorzugsweise parallel zur Fahrzeuglängsachse orientierten Wand eines Batteriefachs (2) angeordnetes Rastelement (8), insbesondere einen Rasthaken (8), aufweist.

3. Flurförderzeug (1) nach Anspruch 1 oder 2, **dadurch gekennzeichnet, dass** die Vorrichtung (7) mehrere im Bodenbereich (6) und/oder mindestens einer, vorzugsweise parallel zur Fahrzeuglängsachse orientierten Wand eines Batteriefachs (2) angeordnete Rastelemente (8), insbesondere Rasthaken (8), aufweist.

4. Flurförderzeug (1) nach einem der Ansprüche 1 bis 3, **dadurch gekennzeichnet, dass** der Abstand zwischen einem Rastelement (8) und einem weiteren, in Gegenrichtung wirksamen Element (8) zum Fixieren der Energieversorgungseinheit (3), insbesondere mindestens einem weiteren Rastelement (8), annähernd einer der Hauptabmessungen der Energieversorgungseinheit (3) entspricht.

5. Flurförderzeug (1) nach einem der Ansprüche 1 bis 4, **dadurch gekennzeichnet, dass** die Fixierung der Energieversorgungseinheit (3) selbsttätig lösbar ist.

6. Flurförderzeug (1) nach einem der Ansprüche 1 bis 5, **dadurch gekennzeichnet, dass** die Fixierung der Energieversorgungseinheit (3) durch Eingriff einer Bedienperson lösbar ist.

7. Flurförderzeug (1) nach einem der Ansprüche 1 bis 6, **dadurch gekennzeichnet, dass** die Vorrichtung (7) mittels Federkraft betätigbar ist.

8. Flurförderzeug (1) nach einem der Ansprüche 1 bis 7, **dadurch gekennzeichnet, dass** die Energieversorgungseinheit (3) als Batterie (3) ausgebildet ist.

9. Flurförderzeug (1) nach einem der Ansprüche 1 bis 7, **dadurch gekennzeichnet, dass** die Energieversorgungseinheit (3) als Baueinheit von Brennstoffzelleneinheit und Energiespeicher ausgebildet ist.
